# EUROPÄISCHE PATENTSCHRIFT

(11) **EP 1 859 180 B1**
(45) Veröffentlichungstag und Bekanntmachung des Hinweises auf die Patenterteilung: **14.01.2009**
(21) Anmeldenummer: 06724645.4
(22) Anmeldetag: 28.04.2006
(51) Int. Cl.: F16H 48/22, B60K 17/16

(54) **DIFFERENTIALGETRIEBEEINHEIT MIT AKTIVER STEUERUNG DER MOMENTENVERTEILUNG**
DIFFERENTIAL TRANSMISSION UNIT FEATURING ACTIVE CONTROLLING OF THE MOMENT DISTRIBUTION
UNITE DE TRANSMISSION DIFFERENTIELLE A COMMANDE ACTIVE DE LA REPARTITION DU COUPLE

(30) Priorität: 28.04.2005 AT 2772005 U
(43) Veröffentlichungstag der Anmeldung: 28.11.2007
(73) Patentinhaber: Magna Powertrain AG & Co. KG, 8502 Lannach (AT)
(72) Erfinder: SACKL, Walter, A-8071 Wagersbach (AT); RAHM, Manfred, A-8103 Rein (AT); SCHRANZ, Jürgen, A-8054 Graz (AT)
(74) Vertreter: Manitz, Finsterwald & Partner GbR
(86) Internationale Anmeldenummer: PCT/EP2006/004018
(87) Internationale Veröffentlichungsnummer: WO 2006/114331

(56) Entgegenhaltungen:
- EP-A- 0 662 402
- US-A- 5 370 588
- US-A- 5 910 064

## Beschreibung

Die Erfindung betrifft eine Differentialgetriebeeinheit mit aktiver Steuerung der Momentenverteilung, bestehend aus einem Differentialgetriebe mit zwei Ausgangswellen, dessen Korb das Eingangsglied bildet, aus je einer, einer Ausgangswelle zugeordneten steuerbaren Reibungskupplung, wobei der Primärteil der Kupplung mit dem Eingangsglied und der Sekundärteil der Kupplung mit der zugeordneten Ausgangswelle antriebsverbunden ist und zumindest eine der Antriebsverbindungen eine Über- beziehungsweise Untersetzung aufweist.

Ein gewöhnliches Differentialgetriebe gleicht Drehzahlunterschiede zwischen den beiden Ausgangswellen aus, wobei sich die Verteilung der Drehmomente aus der Geometrie, insbesondere aus den Zähnezahlen der Zahnräder im Ausgleichsgetriebe ergibt. Eine Differentialgetriebeeinheit mit aktiver Variation der Drehmomentverteilung ermöglicht darüber hinaus eine gezielte Einflussnahme auf die Drehmomentverteilung. So kann beispielsweise bei der Anwendung als Achsdifferential dem schneller rotierenden kurvenäusseren Rad zusätzliche Antriebskraft zugeführt werden. Damit wird in die Fahrdynamik des Fahrzeuges eingegriffen. Deshalb spricht man auch von "Torque - Vectoring".

Derartige Differentialgetriebeeinheiten können sowohl als Achsdifferential (zwischen den Rädern einer Achse), als auch als Zwischenachsdifferential (zwischen zwei angetriebenen Achsen) angeordnet sein. Eine Ausführung als Achsdifferential ist aus der DE 39 00 638 C2 bekannt. Dort sind die Kupplungen auf einer Vorgelegewelle angeordnet, die über eine erste Antriebsverbindung vom Eingangsglied angetrieben ist. Von den beiden Kupplungen führt jeweils eine zweite Antriebsverbindung zu den Achswellen. Der Antriebsverbindung dienen Zahnräder, die insgesamt eine geringe Übersetzung bewirken, wodurch bei mehr oder minder geschlossener Kupplung der jeweiligen Achswelle ein zusätzliches Drehmoment zugeführt wird. Die geringe Übersetzung bedingt ungefähr gleich große Zahnräder, wovon die der ersten Antriebsverbindung für ein sehr hohes Drehmoment ausgelegt sein müssen. Dadurch und durch die in einigem Abstand parallel angeordnete Vorgelegewelle wird diese Differentialgetriebeeinheit schwer und sperrig. So erhöht sie das Gewicht eines Kraftfahrzeuges erheblich und ist in dem knapp bemessenem Raum in der Achsregion nicht unterzubringen.

Ein weiterer wesentlicher Stand der Technik ist durch EP 0 662 402 A gegeben.

Es ist somit Aufgabe der Erfindung, eine Differentialgetriebeeinheit so zu gestalten, dass sie leicht baut und wenig Raum in Anspruch nimmt. Erfindungsgemäß wird das mit den kennzeichnenden Merkmalen des 1. Anspruches erreicht.

Die die zugeordnete Ausgangswelle umgebenden Kupplungen haben zwar einen größeren Aussendurchmesser, da sie aber ungefähr in einer Flucht mit dem großen Tellerrad angeordnet sind, wird dadurch das Gehäuse kaum größer. Ausserdem wächst die Reibfläche einer Kupplungslamelle mit der zweiten Potenz des Radius, sodass mit weniger Lamellen das Auslangen gefunden wird. Der geringfügige Versatz ihrer Mittenachse bezüglich der Mittenachse der zugeordneten Ausgangswelle tut dem keinen Abbruch. Vielmehr erlaubt er den Einsatz von Zahnrädern mit Innenverzahnung, die durch den damit erreichbaren hohen Überdeckungsgrad (es sind viele Zähne gleichzeitig im Eingriff) erheblich kleiner ausgelegt werden können und zudem für die vom Verhältnis eins zu eins nur wenig abweichenden Übersetzungsverhältnisse besser geeignet sind. Sie brauchen insgesamt viel weniger Bauraum, da ja ein Zahnrad innerhalb des anderen ist. Dadurch kann auch der Innendurchmesser des die zugeordnete Ausgangswelle umgebenden Sekundärteiles der Kupplung klein gehalten werden.

Soweit die (zweite) Antriebsverbindung zwischen der Kupplung und der Achswelle. Für die erste Antriebsverbindung, die zwischen dem Eingangsglied und der Kupplung angeordnet ist, gibt es im Rahmen der Erfindung verschiedene Möglichkeiten. Ihnen allen ist gemein, dass auch sie denselben Achsversatz erlauben müssen.

In einer ersten Ausführungsform ist diese Antriebsverbindung mittels eines mit dem Primärteil der Kupplung verbundenen Hohlrades und eines mit dem Eingangsglied verbundenen und mit dem Hohlrad kämmenden Zahnrades mit Aussenverzahnung hergestellt (Anspruch 2). In einer zweiten Ausführungsform ist diese Antriebsverbindung mittels eines mit dem Primärteil der Kupplung verbundenen Zahnrades mit Aussenverzahnung und eines mit dem Eingangsglied verbundenen Hohlrades hergestellt, welches mit dem Zahnrad mit Aussenverzahnung kämmt (Anspruch 3). Bei beiden kommen die Vorteile einer Innenverzahnung voll zum Tragen. Welche der beiden vorzuziehen ist, hängt von der gewünschten Übersetzung und von den baulichen Gegebenheiten ab.

In einer besonders vorteilhaften Ausgestaltung ist der Sekundärteil der Kupplung im Gehäuse der Differentialgetriebeeinheit gelagert und der Primärteil auf dem Sekundärteil zentriert (Anspruch 4). Das ist raumsparend und gibt günstige Lagerungsverhältnisse und kurze Toleranzketten.

In einer dritten Ausführungsform ist die erste Antriebsverbindung, das ist die zwischen dem Eingangsglied und dem Primärteil der Kupplung, durch eine synchrone Achsversatzkupplung hergestellt (Anspruch 5). Eine solche erlaubt zwar keine von eins zu eins abweichende Übersetzung, aber die kann ja in der zweiten Antriebverbindung, die jedenfalls eine Innenverzahnung aufweist, hergestellt werden. Mit Vorteil besteht die synchrone Achsversatzkupplung aus zwei achsversetzten Scheiben und mindestens drei diese auf gleichen Radien koppelnden Verbindungslaschen, wobei die erste Scheibe mit dem Eingangsglied und die zweite Scheibe mit dem Primärteil der Kupplung drehfest verbunden ist (Anspruch 6). Das hat den Vorteil, dass sich die Reaktionskräfte gegenseitig aufheben, sodass dadurch die Lager der rotierenden Teile weniger beansprucht sind.

In einer anderen Ausführungsform besteht die synchrone Achsversatzkupplung aus zwei achsversetzten Scheiben, die über eine Zwischenscheibe in der Art einer Oldham - Kupplung zusammenwirken (Anspruch 7).

Vorzugsweise ist der genannte Sekundärteil der Kupplung der Innenteil der Kupplung. Für sämtliche der genannten Ausführungsformen ist es alternativ hierzu auch möglich, dass der Sekundärteil der Kupplung ihr Außenteil ist, insbesondere wenn eine Übersetzung ins Langsame erfolgen soll.

Im Folgenden wird die Erfindung anhand von Abbildungen beschrieben und erläutert. Es stellen dar:
- - Fig. 1:: Eine erfindungsgemäße Differentialgetriebeeinheit in einer ersten Ausführungsform, schematisiert,
- Fig. 2:: Querschnitte gemäß IIa und IIb in Fig. 1,
- Fig. 3:: Eine erfindungsgemäße Differentialgetriebeeinheit in einer zweiten Ausführungsform, schematisiert,
- Fig. 4:: Eine erfindungsgemäße Differentialgetriebeeinheit in einer dritten Ausführungsform,
- - Fig. 5:: Querschnitte gemäß V in Fig. 4,
- - Fig. 6:: Eine praktische Gestaltung der zweiten Ausführungsform im Längsschnitt,
- - Fig. 7:: Einen Querschnitt nach VII in Fig.6,
- - Fig. 8:: Eine Variante der ersten Ausführungsform nach Fig. 1.

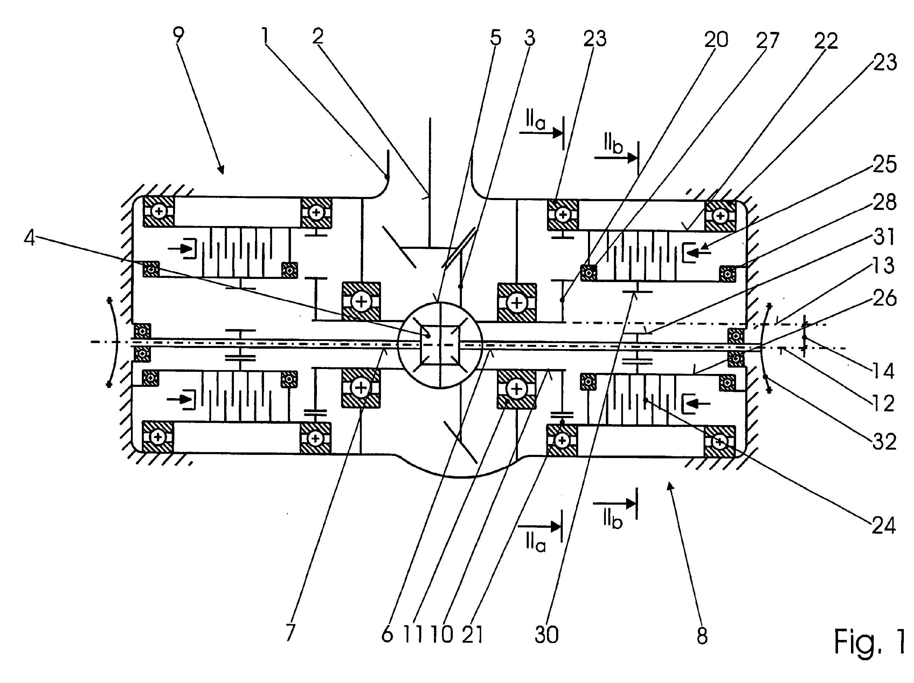

In **Fig. 1** ist das Gehäuse einer Differentialgetriebeeinheit angedeutet und mit 1 bezeichnet. Hier ist es ein Achsdifferential eines Kraftfahrzeuges mit in Längsrichtung verlaufendem Antriebsstrang, der im Gehäuse 1 mit einem Triebling 2 endet, der mit einem Tellerrad 3 kämmt. In einem Fahrzeug mit quer eingebautem Motor oder wenn es sich bei der Differentialgetriebeeinheit um ein Zwischenachsdifferential handelt, wäre anstelle von Triebling 2 und Tellerrad 3 eine Stirnradstufe.

Das Tellerrad 3 umgibt ein Differentialgetriebe 4 und ist mit dessen Differentialkorb 5 drehfest verbunden. Dieser bildet das Eingangsglied der Differentialgetriebeeinheit. Auf den beiden entgegengesetzten Seiten des Gehäuses 1 ist hier eine rechte Achswelle 6 und eine linke Achswelle 7 vorgesehen. Die gesamte Differentialgetriebeeinheit gliedert sich somit in ein Differential 4 und in zwei Momentenüberlagerungseinheiten 8, 9, auf jeder Seite eine. Diese (8,9) sind spiegelgleich, weshalb im Folgenden nur eine Seite beschrieben wird.

Der Differentialkorb 5 geht in eine Hohlwelle 10 über, die mittels eines Lagers 11 im Gehäuse 1 gelagert und mit der Achswelle 6 bzw. deren Mittellinie 12 konzentrisch ist. Sie trägt ein erstes Zahnrad 20, welches mit einem ersten Hohlrad 21 kämmt. Das erste Hohlrad 21 ist hier mit dem Primärteil 22 einer Kupplung fest verbunden und rotiert mit dieser um eine Achse 13, welche gegenüber der Mittellinie 12 um einen Betrag 14 versetzt ist. Der Primärteil 22 der Kupplung ist hier deren Außenteil und mittels Lagern 23 im Gehäuse 1 gelagert. Der Sekundärteil 26 der Kupplung ist der Innenteil, zwischen ihm und dem Primärteil 22 der Kupplung befindet sich ein Lamellenpaket 24, das aus einander abwechselnden Außenlamellen und Innenlamellen mit Kreisring-Kontur besteht. Der Sekundärteil 26 der Kupplung ist mittels eines Lagers 27 im Kupplungsaußenteil 22 und mittels eines Lagers 28 im Gehäuse drehbar gelagert. Zum Beaufschlagen der Kupplung ist eine Druckplatte 25 vorgesehen.

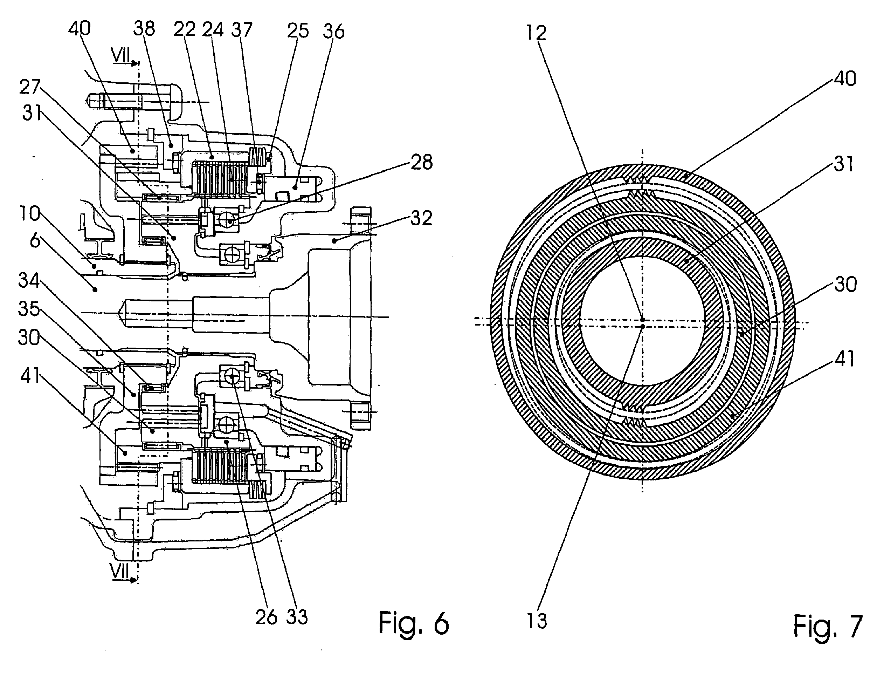

Im Inneren des Sekundärteiles 26 der Kupplung ist ein zweites Hohlrad 30 befestigt. Es kämmt mit einem zweiten Zahnrad 31, welches mit der rechten Achswelle 6 drehfest verbunden ist und dessen Achse somit wieder in der Mittellinie 12 liegt. Die Achswelle 6 ragt aus dem Gehäuse 1 heraus und bildet dort einen Flansch 32 (siehe Fig. 6), der die Antriebsverbindung zu einem Rad herstellt.

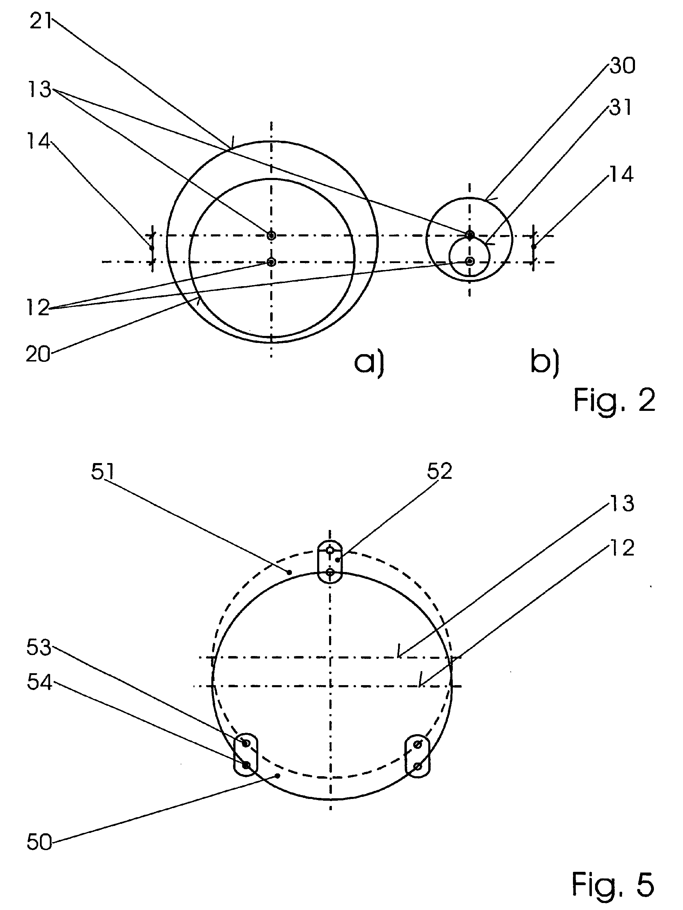

In **Fig. 2** sind die Eingriffsverhältnisse der beiden Antriebsverbindungen schematisch im Querschnitt dargestellt. Das um die Achse 12 rotierende erste Zahnrad 20 kämmt mit dem um die Achse 13 rotierenden Hohlrad 21 und das zweite Hohlrad 30, welches um die Achse 13 rotiert, kämmt mit dem zweiten Zahnrad 31, welches wieder um die Achse 12 rotiert. Auf diese Weise sind leicht Übersetzungsverhältnisse nahe einem Verhältnis 1:1 mit den Außenabmessungen nur eines einzigen Zahnrades zu erreichen. Für solche Übersetzungsverhältnisse würden außen verzahnte Zahnräder angenähert gleich groß sein und in einer Ebene quer zu ihrer Achse doppelt so viel Bauraum beanspruchen.

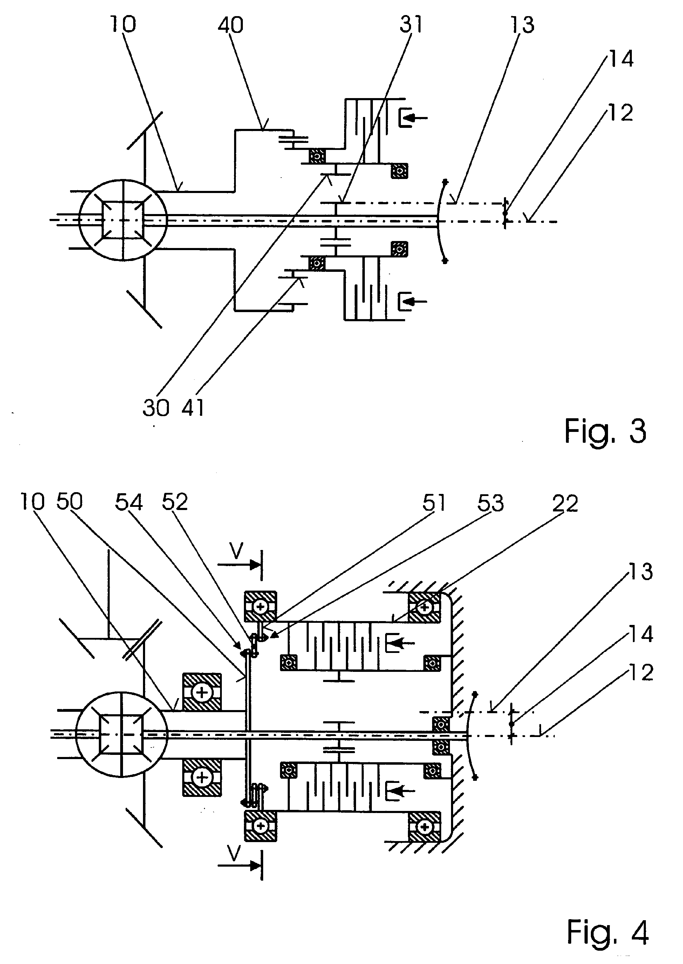

Die Ausführungsform der **Fig. 3** unterscheidet sich von der der Fig. 1 nur in der Ausgestaltung der ersten Antriebsverbindung. Hier trägt die mit dem Differentialkorb 5 drehfest verbundene Hohlwelle 10 anstelle eines außenverzahnten Zahnrades ein erstes Hohlrad 40, welches mit einem ersten Zahnrad 41 kämmt. Das erste Hohlrad 40 rotiert demnach um die erste Achse 12 und das erste Zahnrad 41 um die dazu um einen Betrag 14 versetzte zweite Achse 13. Die zweite Antriebsverbindung zwischen dem zweiten Hohlrad 30 und dem zweiten Zahnrad 31 ist unverändert.

Die Variante der **Fig. 4** unterscheidet sich von der der Fig. 1 wieder nur in der ersten Antriebsverbindung zwischen der Hohlwelle 10 und dem Primärteil 22 der Kupplung. An der Hohlwelle 10 ist eine erste Scheibe 50 befestigt und am Primärteil 22 der Kupplung eine zweite Scheibe 51. Die beiden Scheiben haben somit wieder um den Betrag 14 gegeneinander versetzte Drehachsen. Zur synchronen Übertragung der Drehbewegung sind drei Laschen 52 vorgesehen, deren ein Ende um einen Schwenkzapfen 53 in der zweiten Scheibe und deren anderes Ende um einen Schwenkzapfen 54 in der ersten Scheibe 50 schwenkbar ist. Die kinematischen Verhältnisse sind in **Fig. 5** besser zu erkennen.

**Fig. 6** und **Fig. 7** zeigen eine bevorzugte Ausführungsform der Variante der Fig. 3. Sie entspricht weitgehend der Beschreibung der Fig. 1 und Fig. 2, weshalb auch deren Bezugszeichen verwendet sind. Sie unterscheidet sich nur in der Ausführung der Lagerungen der drehenden Teile. So ist die Radwelle 6 mittels eines Lagers 33 im Gehäuse 1 gelagert und somit gegenüber diesem zentriert. Zwischen dem mit ihr drehfest verbundenen zweiten Zahnrad 31 und einer Scheibe 35 des ersten Hohlrades 40 ist ein Nadellager 34 zur Zentrierung der Hohlwelle und des mit ihr fest verbundenen ersten Hohlrades 40 bezüglich des zweiten Zahnrades 31 bestimmt. Das zweite Hohlrad 30 mit der Drehachse 13 ist mittels Lagern 28 im Gehäuse 1 gelagert und zentriert seinerseits mittels eines Nadellagers 27 den Primärteil 22 der Kupplung. Auf diesen wirkt einerseits ein hydraulisch beaufschlagter Ringkolben 36 über ein Nadellager 37 auf die Druckplatte 25, wobei ein Widerlager 38 die vom Ringkolben 36 ausgeübte Kraft aufnimmt.

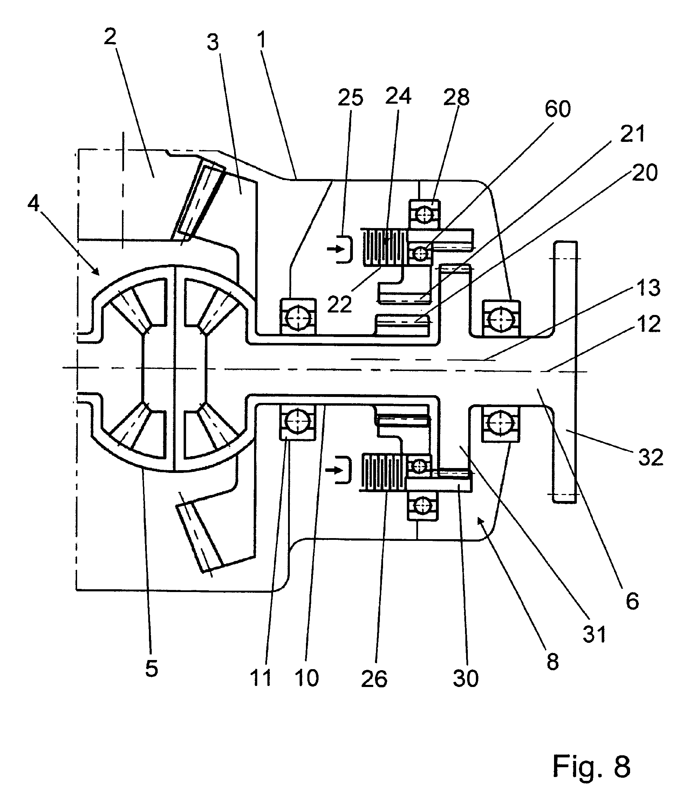

**Fig. 8** zeigt eine Variante der Differentialgetriebeeinheit nach Fig. 1 (nur rechte Seite mit Achswelle 6 und Momentenüberlagerungseinheit 8). Auch hier ist ein erstes Hohlrad 21, das mit einem ersten Zahnrad 20 einer Hohlwelle 10 kämmt, mit dem Primärteil 22 einer Kupplung fest verbunden. Das erste Hohlrad 21 rotiert mit der Kupplung um eine Achse 13, welche gegenüber der Mittellinie 12 versetzt ist. An dem Sekundärteil 26 der Kupplung ist ein zweites Hohlrad 30 befestigt. Es kämmt mit einem zweiten Zahnrad 31, welches mit der Achswelle 6 drehfest verbunden ist und dessen Achse somit wieder in der Mittellinie 12 liegt. Das erste Hohlrad 21 (mit dem Primärteil 22 der Kupplung) ist mittels eines Lagers 60 an dem zweiten Hohlrad 30 (mit dem Sekundärteil 26 der Kupplung) drehbar gelagert, welches wiederum mittels eines Lagers 28 im Gehäuse 1 drehbar gelagert ist.

Im Unterschied zu den vorstehend beschriebenen Ausführungsformen ist bei der Variante nach Fig. 8 der Primärteil 22 der Kupplung deren Innenteil, und der Sekundärteil 26 der Kupplung ist deren Außenteil.

Zu sämtlichen im Zusammenhang mit der Erfindung genannten Ausführungsformen ist schließlich noch anzumerken, dass anstelle eines Kugeldifferentialgetriebes auch ein Stirnraddifferentialgetriebe verwendet werden kann, mit einer Anordnung der beiden Kupplungen und Momentenüberlagerungseinheiten asymmetrisch auf einer Seite des Differentialgetriebes, wobei der Korb (Gehäuse) des Differentialgetriebes das Eingangsglied bildet.

## Patentansprüche

1. Differentialgetriebeeinheit mit aktiver Steuerung der Momentenverteilung, bestehend aus einem Differentialgetriebe (4) mit zwei Ausgangswellen (6,7), dessen Korb (5) das Eingangsglied bildet, aus je einer einer Ausgangswelle zugeordneten steuerbaren Reibungskupplung (22,26), wobei der Primärteil (22) der Kupplung mit dem Eingangsglied (5) und der Sekundärteil (26) der Kupplung mit der zugeordneten Ausgangswelle (6,7) antriebsverbunden ist und zumindest eine der Antriebsverbindungen eine Überbeziehungsweise Untersetzung aufweist, **dadurch gekennzeichnet, dass** die Kupplung (22,26) die zugeordnete Ausgangswelle (6,7) umgibt und ihre Mittenachse (13) bezüglich der Mittenachse (12) der zugeordneten Ausgangswelle (6,7) versetzt ist, und dass der die zugeordnete Ausgangswelle (6,7) umgebende Sekundärteil (26) der Kupplung einen Zahnkranz (30) mit Innenverzahnung hat, der mit einem aussenverzahnten Zahnrad (31) auf der zugeordneten Ausgangswelle kämmt.

2. Differentialgetriebeeinheit nach Anspruch 1, **dadurch gekennzeichnet, dass** die Antriebsverbindung zwischen dem Eingangsglied (5) und dem Primärteil (22) der Kupplung mittels eines mit diesem verbundenen ersten Hohlrades (21) und eines mit dem Eingangsglied (5) verbundenen und mit dem Hohlrad (21) kämmenden ersten Zahnrad (20) mit Aussenverzahnung hergestellt ist.

3. Differentialgetriebeeinheit nach Anspruch 1, **dadurch gekennzeichnet, dass** die Antriebsverbindung zwischen dem Eingangsglied (5) und dem Primärteil (22) der Kupplung mittels eines mit diesem verbundenen ersten Zahnrades (41) mit Aussenverzahnung und eines mit dem Eingangsglied (5) verbundenen ersten Hohlrades (40) hergestellt ist, welches mit dem Zahnrad (41) mit Aussenverzahnung kämmt. (Fig.3)

4. Differentialgetriebeeinheit nach Anspruch 3, **dadurch gekennzeichnet, dass** der Sekundärteil (26) der Kupplung im Gehäuse (1) der Differentialgetriebeeinheit gelagert und der Primärteil (22) auf dem Sekundärteil (26) zentriert ist.

5. Differentialgetriebeeinheit nach Anspruch 1, **dadurch gekennzeichnet, dass** die Antriebsverbindung zwischen dem Eingangsglied (5) und dem Primärteil (22) der Kupplung durch eine synchrone Achsversatzkupplung (50-54) hergestellt ist.

6. Differentialgetriebeeinheit nach Anspruch 5, **dadurch gekennzeichnet, dass** die synchrone Achsversatzkupplung (50-54) aus zwei achsversetzten Scheiben (50,51) und mindestens drei diese auf gleichen Radien koppelnden Laschen (52) besteht, wobei die erste Scheibe (50) mit dem Eingangsglied (5) und die zweite Scheibe (51) mit dem Primärteil (22) der Kupplung drehfest verbunden ist.

7. Differentialgetriebeeinheit nach Anspruch 5, **dadurch gekennzeichnet, dass** die synchrone Achsversatzkupplung (50-54) aus zwei achsversetzten Scheiben besteht, die in der Art einer Oldham - Kupplung zusammenwirken.

8. Differentialgetriebeeinheit nach einem der vorstehenden Ansprüche, **dadurch gekennzeichnet, dass** der Sekundärteil (26) der Kupplung ihr Innenteil ist.

9. Differentialgetriebeeinheit nach einem der Ansprüche 1 bis 7, **dadurch gekennzeichnet, dass** der Sekundärteil (26) der Kupplung ihr Außenteil ist.

## Claims

1. A differential transmission unit having an active control of the torque distribution, comprising a differential transmission (4) having two output shafts (6, 7) whose cage (5) forms the input member; a respective controllable friction clutch (22, 26) each associated with an output shaft, with the primary part (22) of the clutch being connected drivewise to the input member (5) and the secondary part (26) of the clutch being connected drivewise to the associated output shaft (6, 7) and at least one of the drive connections having a step-up ratio or a step-down ratio, **characterized in that** the clutch (22, 26) surrounds the associated output shaft (6, 7) and its central axis (13) is offset with respect to the central axis (12) of the associated output shaft (6, 7); and **in that** the secondary part (26) of the clutch surrounding the associated output shaft (6, 7) has an annular gear (30) with inner teeth which meshes with a gear (31) having outer teeth on the associated output shaft.

2. A differential transmission unit in accordance with claim 1, **characterized in that** the drive connection between the input member (5) and the primary part (22) of the clutch is established by means of a first hollow gear (21) connected to said primary part and by means of a first gear (20) having outer teeth connected to the input member (5) and meshing with the hollow gear (21).

3. A differential transmission unit in accordance with claim 1, **characterized in that** the drive connection between the input member (5) and the primary part (22) of the clutch is established by means of a first gear (41) with outer teeth connected to said primary part and by means of a first hollow gear (40) which is connected to the input member (5) and which meshes with the gear (41) having outer teeth. (Fig.3)

4. A differential transmission unit in accordance with claim 3, **characterized in that** the secondary part (26) of the clutch is supported in the housing (1) of the differential transmission unit and the primary part (22) is centered on the secondary part (26).

5. A differential transmission unit in accordance with claim 1, **characterized in that** the drive connection between the input member (5) and the primary part (22) of the clutch is established by a synchronous axial offset clutch (50 - 54).

6. A differential transmission unit in accordance with claim 5, **characterized in that** the synchronous axial offset clutch (50 - 54) comprises two axially offset disks (50, 51) and at least three plates (52) coupling them on the same radii, with the first disk (50) being rotationally fixed to the input member (5) and the second disk (51) being rotationally fixedly connected to the primary part (22) of the clutch.

7. A differential transmission unit in accordance with claim 5, **characterized in that** the synchronous axial offset clutch (50 - 54) comprises two axially offset disks which cooperate in the manner of an Oldham clutch.

8. A differential transmission unit in accordance with any one of the preceding claims, **characterized in that** the secondary part (26) of the clutch is its inner part.

9. A differential transmission unit in accordance with any one of the claims 1 to 7, **characterized in that** the secondary part (26) of the clutch is its outer part.

## Revendications

1. Unité de transmission différentielle avec commande active de la répartition du couple, comprenant une transmission différentielle (4) avec deux arbres de sortie (6, 7), dont la cage (5) forme l'organe d'entrée, comprenant respectivement un embrayage à friction piloté (22, 26) associé à l'un des arbres de sortie respectif, dans laquelle la partie primaire (22) de l'embrayage est reliée en termes d'entraînement à l'organe d'entrée (5) et la partie secondaire (26) de l'embrayage est reliée en termes d'entraînement à l'arbre de sortie associé (6, 7), et l'une au moins des liaisons d'entraînement comporte une surmultiplication ou respectivement une démultiplication, **caractérisée en ce que** l'embrayage (22, 26) entoure l'arbre de sortie (6, 7) associé et son axe central (13) et décalé par rapport à l'axe central (12) de l'arbre de sortie associé (6, 7), et **en ce que** la partie secondaire (26) de l'embrayage, qui entoure l'arbre de sortie associé (6, 7), possède une couronne dentée (30) avec denture intérieure, laquelle engrène avec un engrenage (31) avec denture extérieure sur l'arbre de sortie associé.

2. Unité de transmission différentielle selon la revendication 1, **caractérisée en ce que** la liaison d'entraînement entre l'organe d'entrée (5) et la partie primaire (22) de l'embrayage est établie au moyen d'un premier engrenage creux (21) relié à celle-ci, et d'un premier engrenage (20) à denture extérieure qui engrène avec l'engrenage creux (21).

3. Unité de transmission différentielle selon la revendication 1, **caractérisée en ce que** la liaison d'entraînement entre l'organe d'entrée (5) et la partie primaire (22) de l'embrayage est établie au moyen d'un premier engrenage (41) à denture extérieure relié à celle-ci, et d'un premier engrenage creux (41) relié à l'organe d'entrée (5), qui engrène avec l'engrenage (41) à denture extérieure (figure 3).

4. Unité de transmission différentielle selon la revendication 3, **caractérisée en ce que** la partie secondaire (26) de l'embrayage est montée dans le carter (1) de l'unité de transmission différentielle, et la partie primaire (22) est centrée sur la partie secondaire (26).

5. Unité de transmission différentielle selon la revendication 1, **caractérisée en ce que** la liaison d'entraînement entre l'organe d'entrée (5) et la partie primaire (22) de l'embrayage est établie par un embrayage synchrone (50-54) à déport d'axe.

6. Unité de transmission différentielle selon la revendication 5, **caractérisée en ce que** l'embrayage synchrone à déport d'axe (50-54) est constitué par deux disques (50, 51) à déport d'axe et par au moins trois pattes (52) qui assurent un accouplement à des rayons égaux, le premier disque (50) étant relié solidairement en rotation à l'organe d'entrée (5) et le second disque (51) étant relié solidairement en rotation à la partie primaire (22) de l'embrayage.

7. Unité de transmission différentielle selon la revendication 5, **caractérisée en ce que** l'embrayage synchrone à déport d'axe (50-54) est constitué par deux disques à déport d'axe, qui coopèrent à la manière d'un embrayage de Oldham.

8. Unité de transmission différentielle selon l'une des revendications précédentes, **caractérisée en ce que** la partie secondaire (26) de l'embrayage est sa partie intérieure.

9. Unité de transmission différentielle selon l'une des revendications 1 à 7, **caractérisée en ce que** la partie secondaire (26) de l'embrayage est sa partie extérieure.
